## Europäisches Patentamt

## European Patent Office

## Office européen des brevets

(11) Veröffentlichungsnummer : **0 012 808**
**B1**

(12) **EUROPÄISCHE PATENTSCHRIFT**

(45) Veröffentlichungstag der Patentschrift :
**13.01.82**

(21) Anmeldenummer : **79104117.1**

(22) Anmeldetag : **24.10.79**

(51) Int. Cl.³ : **C 05 G 1/00**

(54) Düngemittelpasten, Verfahren zu ihrer Herstellung und ihre Verwendung zur Pflanzendüngung.

(30) Priorität : **27.10.78 DE 2846831**

(43) Veröffentlichungstag der Anmeldung :
**09.07.80 (Patentblatt 80/14)**

(45) Bekanntmachung des Hinweises auf die Patenterteilung : **13.01.82 Patentblatt 82/02**

(84) Benannte Vertragsstaaten :
**AT BE CH DE FR GB IT NL SE**

(56) Entgegenhaltungen :
**DE - A - 1 592 622**
**FR - A - 2 028 521**
**FR - A - 2 086 482**
**FR - A - 2 213 962**
**FR - A - 2 372 130**
**US - A - 3 076 701**
**US - A - 3 244 500**

(73) Patentinhaber : **HOECHST AKTIENGESELLSCHAFT**
**Postfach 80 03 20**
**D-6230 Frankfurt/Main 80 (DE)**

(72) Erfinder : **Meyer, Klaus, Dr.**
**Im Stückes 36**
**D-6233 Kelkheim (Taunus) (DE)**

EP 0 012 808 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Düngemittelpasten, Verfahren zu ihrer Herstellung und ihre Verwendung zur Pflanzendüngung

Gegenstand der Erfindung sind wasserlösliche Düngemittelpasten, Verfahren zu ihrer Herstellung und ihre Verwendung zur Pflanzendüngung. Wäßrige Lösungen von Düngemitteln werden im allgemeinen durch Auflösen von festen Nährsalzen oder löslichen Düngemitteln in Wasser oder durch Verdünnen von flüssigen Düngemittel-Lösungskonzentraten, sogenannten Flüssigdüngern hergestellt. Die festen Düngemittel benötigen jedoch einige Zeit, bis sie sich vollständig in Wasser aufgelöst haben, die flüssigen Düngemittelkonzentrate haben einen relativ niedrigen Nährstoffgehalt und erfordern zudem für Lagerung und Transport flüssigkeitsdichte und korrosionsbeständige Behälter. Die Dosierungsmöglichkeiten sowohl von festen als auch von flüssigen Düngemitteln sind außerdem unbefriedigend.

Gegenstand der vorliegenden Erfindung sind daher wasserlösliche Düngemittelpasten, gekennzeichnet durch einen Gehalt von 58 bis 88 Gew.-%, vorzugsweise 63 bis 82 Gew.-% wasserlöslicher Pflanzennährstoffe, vorzugsweise Harnstoff und/oder N- und/oder P- und/oder K- und/oder N,P,K-Düngesalze, 0 bis 5 Gew.-%, gegebenenfalls vorzugsweise 1 bis 3, insbesondere 2 Gew.-% wasserlöslicher Spurenelementverbindungen, 4 bis 12 Gew.-%, vorzugsweise 6 bis 10 Gew.-% Polyglykoläther mit mindestens 9 AeO-Einheiten, vorzugsweise vom mittleren Molekulargewicht 400 bis 10 000, insbesondere 600 bis 6 000 und/oder wasserlöslicher Polyglykolätherderivate mit mindestens 8 AeO-Einheiten, vorzugsweise mit 9 bis 230 und insbesondere mit 11 bis 60 AeO-Einheiten, sowie 8 bis 25 Gew.-% Wasser.

Der Begriff AeO-Einheiten bedeutet dabei die Anzahl Äthylenoxydeinheiten pro Molekül Polyglykoläther bzw. Polyglykolätherderivat, da letztere bekanntlich Additionsprodukte des Äthylenoxyds darstellen (vgl. z.B. Kurt Lindner, Tenside-Textilhilfsmittel-Waschrohstoffe, Wiss. Verlagsges. Stuttgart (1964) Bd. I, S. 183 und 865 ff).

Gegenstand der Erfindung ist weiterhin ein Verfahren zur Herstellung der obengenannten wasserlöslichen Düngemittelpasten, das dadurch gekennzeichnet ist, daß man bei 35 bis 100 °C, vorzugsweise 45 bis 70 °C 4 bis 12 Gew.-teile, vorzugsweise 6 bis 10 Gew.-teile Polyglykoläther mit mindestens 9 AeO-Einheiten, vorzugsweise vom mittleren Molekulargewicht 400 bis 10 000, insbesondere 600 bis 6 000 und/oder wasserlösliche Polyglykolätherderivate mit mindestens 8 AeO-Einheiten, vorzugsweise mit 9 bis 230 und insbesondere mit 11 bis 60 AeO-Einheiten in 8 bis 25 Gew.-teilen Wasser löst, dieser Lösung unter Rühren 58 bis 88 Gew.-teile, vorzugsweise 63 bis 82 Gew.-teile wasserlösliche Pflanzennährstoffe, vorzugsweise Harnstoff und/oder N- und/oder P- und/oder K- und/oder N,P,K-Düngesalze sowie 0 bis 5 Gew.-teile, gegebenenfalls vorzugsweise 1 bis 3, insbesondere 2 Gew.-teile wasserlösliche Spurenelementverbindungen zugibt, wobei gegebenenfalls die Harnstoffzugabe zuerst erfolgt, und die dabei erhaltene Mischung unter weiterem Rühren auf Raumtemperatur (ca. 20 bis 25 °C) abkühlt. Das Rühren bzw. gute Durchmischen des Ansatzes während des Abkühlens ist erforderlich, um eine Separirung von Nährstoffen zu vermeiden.

Die erfindungsgemäß hergestellten Düngemittelpasten werden in völlig homogener Form erhalten. Sie lassen sich, z.B. in Tuben abgepackt, sehr leicht und einfach durch Herausdrücken in Strangform dosieren. In verschlossenen Behältern zeigen sie auch nach mehrwöchiger Lagerung bei Raumtemperatur oder bei + 40 °C und auch im Kältetest keinerlei Separierung. Die Dichte der Pasten variiert mit der Art und Menge der Inhaltsstoffe und beträgt vorzugsweise etwa 1,4 bis 1,6 kg/l. Der pH-Wert ist nich kritisch und wird im allgemeinen durch die Pasteninhaltsstoffe, insbesondere durch die Pflanzennährstoffbestandteile bestimmt. Er kann z.B. im sauren bis neutralen Bereich liegen oder auch basische Werte annehmen. In Wasser sind die Düngemittelpasten sehr leicht und rasch löslich und bilden im allgemeinen klare Lösungen, insbesondere bei Konzentrationen bis zu etwa 10 Gew.-%. Zur Kennzeichnung können die Pasten mit bekannten Färbemitteln eingefärbt werden. Bei Pasten mit Gehalten an solchen grenzflächenaktiven Polyglykolätherderivaten, die in wäßrigen Lösungen ggf. zum Schäumen neigen, können übliche Entschäumer, wie z.B. Silicone mitverwendet werden.

Als Polyglykoläther, die z.B. durch Einwirkung von Äthylenoxyd auf Glykol oder niedere Glykoläther gewonnen werden können, bzw. als wasserlösliche Polyglykolätherderivate können erfindungsgemäß zum Beispiel folgende Produkte eingesetzt werden : Polyglykoläther (sie sind im Handel meist als « Polyglykole » bekannt), vorzugsweise solche mit mittleren Molekulargewichten von 400 bis 10 000, insbesondere 600 bis 6 000. Sie sind unter Normalbedingungen im unteren Molgewichtsbereich flüssig und stellen im oberen Molgewichtsbereich feste, wachsartige Substanzen dar. Die genannten Polyglykoläther sind besonders bevorzugt. Als wasserlösliche Polyglykolätherderivate mit mindestens 8 AeO-Einheiten im Molekül kommen z.B. solche Polyglykoläther infrage, deren vorzugsweise eine oder auch beide entständigen Hydroxylgruppen substituiert, vorzugsweise veräthert, verestert, durch Amino- oder Iminogruppen oder durch Säureamidgruppen substituiert sind und die auch grenzflächenaktiv sein können. Besonders bevorzugt sind Alkylpolyglykoläther und Alkylphenylpolyglykoläther, welche durch Addition von Äthylenoxyd an Alkohole, lineare oder verzweigte einwertige oder auch mehrwertige Alkohole, die auch ungesättigt sein können, bzw. an Alkylphenole gewonnen werden können. Bevorzugt sind weiterhin auch Acylpolyglykoläther.

Genannt seien beispielsweise Methylpolyglykoläther, Äthylpolyglykoläther, Butylpolyglykoläther, Octylpolyglykoläther, Laurylpolyglykolätl er, Isotridecylpolyglykoläther, Hexadecylpolyglykoläther, Octadecylpolyglykoläther, vorzugsweise mit bis zu 60 AeO-Einneiten, wie z.B. (n-$C_{18}$)-Alkylpolyglykoläther

mit 50 AeO-Einheiten bzw. mit 25 AeO-Einheiten bzw. mit 11 AeO-Einheiten, $(C_{12}\text{-}C_{15})$-Alkylpolyglykoläther mit 25 AeO-Einheiten, Additionsprodukte des Äthylenoxyds an Glycerin, Glycerinester oder Sorbitane, Nonylphenylpolyglykoläther mit 30 AeO-Einheiten bzw. mit 23 AeO-Einheiten bzw. mit 15 AeO-Einheiten, Tributylphenylpolyglykoläther mit 50 AeO-Einheiten bzw. mit 18 AeO-Einheiten, ferner Ester von Polyglykoläthern mit organischen oder anorganischen Säuren bzw. Säurederivaten, z.B. niederen oder höheren Carbonsäuren wie Essigsäure, Propionsäure, Laurinsäure, $(C_8$ bis $C_{24})$-Carbonsäuren, Fettsäuren, z.B. $(C_{12}\text{-}C_{15})$-Fettacylpolyglykolester mit 25 AeO-Einheiten, sowie Ester mit Phosphorsäure u. Phosphonsäuren bzw. deren Derivaten.

Bevorzugt sind ferner wasserlösliche, blockcopolymere Polyätherglykole, wie sie z.B. durch Addition von Äthylenoxyd (AeO) an ein Kondensationsprodukt aus Propylenoxyd (PyO) mit Propylenglykol gewonnen werden können, beispielsweise

BcPG 20 (20 Gew.-% AeO, 80 Gew.-% PyO, flüssig)
BcPG 40 (40 Gew.-% AeO, 60 Gew.-% PyO, flüssig)
BcPG 80 (80 Gew.-% AeO, 20 Gew.-% PyO, fest, Mol.-gew. 6 600-9 300).

Weiterhin können auch Mischungen aus verschiedenen Polyglykoläthern und/oder verschiedenen wasserlöslichen Polyglykolätherderivaten eingesetzt werden.

Als wasserlösliche Pflanzennährstoffe kommen alle bekannten wasserlöslichen anorganischen und/oder organischen Düngemittel, Düngesalze bzw. Mineraldüngersalze zur Anwendung, wie z.B. Harnstoff, Ammoniumnitrat, Ammoniumsulfat, Ammoniumphosphate, Kaliumchlorid, Kaliumsulfat, Kaliumphosphate, Ammonsulfatsalpeter, Chilesalpeter, Kaliumammoniumphosphat, Natronsalpeter, Stickstoffdüngersalze, Harnstoff enthaltende Mischdüngersalze, Kalisalze, N,P,K-Volldüngersalze, Spurenelemente enthaltende N,P,K-Volldüngersalze sowie Gemische aus solchen Düngemitteln bzw. Mineraldüngersalzen.

Als wasserlösliche Spurenelementverbindungen kommen gegebenenfalls die wasserlöslichen Salze, insbesondere die Chloride, Sulfate oder Nitrate der Elemente Ca, Mg, Fe, Ni, Mn, Zn, Cu, Co zur Anwendung, ferner Mo in Form von wasserlöslichen Molybdaten sowie B in Form von Borsäure oder Borsäureanhydrid. Die Spurenelementverbindungen können beliebig kombiniert und in ihrer Menge den jeweiligen Erfordernissen angepaßt werden.

Zur Gewährleistung der Wasserlöslichkeit erfordern einige Spurenelemente bekanntlich eine Stabilisierung ihrer Salze, z.B. durch geeignete Komplexbildner, und die im Handel erhältlichen Spurenkonzentrate enthalten diese Spurensalze im allgemeinen bereits in entsprechend komplexierter Form. Das in den nachfolgenden Beispielen eingesetzte handelsübliche Spurenkonzentrat A stellt z.B. ein solchermaßen komplexiertes Produkt dar.

Ein besonderer Vorteil des erfindungsgemäßen Pastenherstellungsverfahrens kann u.a. auch darin gesehen werden, daß z.B. die Pflanzennährstoffe und/oder Spurenelementverbindungen nicht nur als trockene Produkte, sondern ggf. vorteilhaft auch in filterfeuchter Form eingesetzt werden können, wobei die dadurch eingebrachte Wassermenge in der Wasserbilanz des Verfahrensproduktes zu berücksichtigen ist. Letzteres gilt auch für ggf. vorhandene Wassergehalte in den Polyglykoläthern bzw. deren Derivaten.

Da die erfindungsgemäßen Düngemittelpasten sich in Wasser praktisch sofort auflösen, entfallen für ihre Anwendung aus wäßrigen Lösungen die z.B. für die Anwendung von entsprechenden festen Düngemitteln aus wäßrigen Lösungen erforderlichen zusätzlichen Arbeitsgänge wie Anteigen, Vorlösen, Wasser-Vorwärmen vollständig. Auch das leidige Problem des Staubens pulverförmiger Düngemittel existiert bei den Pasten nicht. Darüber hinaus liegen die Nährstoffgehalte in den Pasten um das 2- bis 3-fache höher als in gleichvolumigen bekannten Flüssigdüngern. Auch die Dosierung und Handhabung der Düngemittelpasten, z.B. aus Tuben, ist wesentlich einfacher und unproblematischer, vergleichsweise zu bekannten vergleichbaren Düngemittelformulierungen. Im Vergleich zu den Flüssigdüngern besteht außerdem keine Gefahr des Auslaufens aus undichten Behältern. Durch die im Vergleich zu den Schüttgewichten von festen Pflanzennährsalzen bzw. den spezifischen Gewichten von flüssigen Düngemitteln sehr hohe Dichte von ca. 1,4 bis 1,6 kg/l bei den erfindungsgemäßen Pasten können durch die letzteren erhebliche Lager-, Verpackungs- und Transportvolumina eingespart werden. Insgesamt gesehen beinhalten die neuen Düngemittelpasten einen beachtlichen technischen Fortschritt, ihre Eigenschaftsmerkmale sind außerordentlich überraschend und aus dem bekannten Stand der Technik nicht herleitbar.

Das Verhältnis der einzelnen Pflanzennährstoffe in den erfindungsgemäßen Düngemittelpasten ist unkritisch und kann den bei Düngemitteln üblichen und bekannten Erfordernissen angepaßt werden. Es können sowohl einzelne Nährstoffe als auch Nährstoffkombinationen als Pasten formuliert werden.

Die erfindungsgemäßen Düngemittelpasten besitzen eine ausgezeichnete Düngewirksamkeit. Zur Anwendung werden sie in Wasser gelöst und als wäßrige Lösungen auf die zu düngenden Pflanzenkulturen und/oder Kulturböden bzw. Kultursubstrate aufgebracht oder ggf. auch den Kulturböden bzw. Kultursubstraten beigemischt. Die Anwendungskonzentration ist nicht kritisch und kann den jeweiligen praktischen Erfordernissen, z.B. bezüglich Düngemittelmenge oder Pflanzen- bzw. Bodeneigenarten angepaßt werden. So können z.B. Anwendungslösungen mit Pastengehalten von 0,05 bis 5 Gew.-% besonders vorteilhaft sein, jedoch sind auch niedrigere und höhere Konzentrationen denkbar und möglich und können in manchen Fällen auch zweckmäßig sein.

3

# 0 012 808

Die Erfindung wird durch die nachfolgenden Beispiele erläutert.

Beispiel 1

## NPK-Paste 18-12-15 mit Spuren ($K_2O$ als KCl)

Zusammensetzung :

34,17 Gew.-% Harnstoff, techn.
19,84 Gew.-% Monoammoniumphosphat, techn.
25,17 Gew.-% Kaliumchlorid, techn.
 2,02 Gew.-% Spurenkonzentrat A
 7,5  Gew.-% Polyglykol 6 000
11,3  Gew.-% Wasser

Herstellung eines 100 kg-Ansatzes :

In einem 300 l Rührgefäß vom Typ Nauta-Mischer wird unter Rühren bei 60 bis 70 °C der wachsartige Polyglykoläther Polyglykol 6 000 in dem Wasseranteil der Rezeptur gelöst. Anschließend wird bei der gleichen Temperatur der Harnstoffanteil zugesetzt und solange gerührt, bis keine festen Harnstoffpartikel mehr vorhanden sind. Dann werden Monoammoniumphosphat, Kaliumchlorid und das Spurenkonzentrat A eingerührt. Es wird eine homogene flüssige Phase erhalten. Diese wird unter weiterem Rühren auf 25 °C abgekühlt, wobei eine homogene Paste resultiert.

Der Gehalt an Pflanzennährstoffen in der Paste beträgt 18 Gew.-% N, 12 Gew.-% $P_2O_5$, 15 Gew.-% $K_2O$ und 2 Gew.-% Spurensalze.

Der pH-Wert der Paste beträgt 2,8, die Dichte 1 455 g/l bei 20 °C, die Konsistenz ist cremeartigpastös.

Die Paste zeigt auch nach mehrwöchiger Lagerung bei Raumtemperatur bzw. bei + 40 °C sowie bei − 10 °C keine Separierung.

Die Paste ist sehr gut wasserlöslich und bildet klare Lösungen. Es wurden bis zu 10 %ige wässrige Lösungen hersteIlt, die auch nach 24-stündigem Stehen noch klar waren. Der pH-Wert der wässrigen Lösungen ist konzentrationsabhängig und zeigt nach dem Ansetzen der Lösungen folgende Werte :

| Pastenkonzentration | pH-Wert (Glaselektrode) |
|---|---|
| 0,05 Gew.-% | 7,0 |
| 2    Gew.-% | 5,7 |
| 5    Gew.-% | 5,1 |
| 10   Gew.-% | 4,6 |

Beispiel 2

NPK-Paste 16-12-14 mit Spuren ($K_2O$ als $K_2SO_4$)

Zusammensetzung :

29,83 Gew.-% Harnstoff, techn.
19,84 Gew.-% Monoammoniumphosphat, techn.
28,20 Gew.-% Kaliumsulfat, techn.
 2,02 Gew.-% Spurenkonzentrat A
 7,9  Gew.-% Polyglykol 6000
12,21 Gew.-% Wasser

Herstellung eines 100 kg-Ansatzes :

Die Herstellung wird analog Beispiel 1 durchgeführt, jedoch mit dem Unterschied, daß die Zubereitung der homogenen Phase nicht bei 60 bis 70 °C, sondern bei 40 bis 50 °C erfolgt.

Es wird eine homogene Paste von cremeartig-pastöser, geschmeidiger Konsistenz erhalten. Der pH-Wert der Paste beträgt 3,2, die Dichte 1540 g/l bei 20 °C.

Der Gehalt an Pflanzennährstoffen in der Paste beträgt 16 Gew.-% N, 12 Gew.-% $P_2O_5$, 14 Gew.-% $K_2O$ und 2 Gew.% Spurensalze.

Lagerfähigkeit, Temperaturbeständigkeit, Wasserlöslichkeit und das pH-Wert-Verhalten von bis zu 10 %igen wässrigen Lösungen entsprechen der in Beispiel 1 beschriebenen Paste.

4

# 0 012 808

## Beispiele 3 bis 25

Die Herstellung der Pastenbeispiele 3 bis 25 wurde wie in Beispiel 1 beschrieben durchgeführt. Die Zusammensetzung der Pasten sowie ihr Gehalt an Pflanzennährstoffen sind in der Tabelle 1 zusammengefaßt.

Bei allen Beispielen werden homogene Pasten von cremeartig-pastöser Konsistenz erhalten, die hinsichtlich Lagerfähigkeit, Temperaturbeständigkeit und Wasserlöslichkeit weitgehend den in den Beispielen 1 und 2 beschriebenen Pasten entsprechen.

### Tabelle 1

| Beispiel Nr. | Zusammensetzung der Düngemittelpasten (in Gew.-%) | | | Nährstoffgehalt der Paste (in Gew.-%) | | | | |
|---|---|---|---|---|---|---|---|---|
| | Nährstoffe (Gew.-%) | Polyglykoläther-komponente (Gew.-%) | Wasser (Gew.-%) | N (Gew.-%) | $P_2O_5$ (Gew.-%) | $K_2O$ (Gew.-%) | Spuren salze (Gew.-%) |
| 3 | 31,4 Harnstoff<br>21,3 $(NH_4)H_2PO_4$<br>28,3 KCl | 8,0 Polyglykol 6 000 | 11,0 | 17 | 13 | 17 | |
| 4 | 29,8 Harnstoff<br>19,8 $(NH_4)H_2PO_4$<br>28,2 $K_2SO_4$<br>2,0 Spurenkonzentrat A | 4,0 $nC_{18}$-Alkylpolygly-koläther (25 AeO) | 16,2 | 16 | 12 | 14 | 2 |
| 5 | 34,2 Harnstoff<br>19,8 $(NH_4)H_2PO_4$<br>25,2 KCl<br>2,0 Spurenkonzentrat A | 7,5 Polyglykol 1 000 | 11,3 | 18 | 12 | 15 | 2 |
| 6 | 27,9 Harnstoff<br>26,3 $(NH_4)H_2PO_4$<br>26,7 KCl | 8,0 Polyglykol 10 000 | 11,1 | 16 | 16 | 16 | |
| 7 | 27,9 Harnstoff<br>26,3 $(NH_4)H_2PO_4$<br>26,7 KCl | 8,0 $nC_{18}$-Alkylpolygly-koläther (50 AeO) | 11,1 | 16 | 16 | 16 | |
| 8 | 41,3 Harnstoff<br>18,0 $(NH_4)H_2PO_4$<br>18,3 KCl | 8,5 Tributylphenylpoly-glykoläther (50 AeO) | 13,9 | 21 | 11 | 11 | |
| 9 | 29,8 Harnstoff<br>19,8 $(NH_4)H_2PO_4$<br>30,2 $K_2SO_4$ | 7,9 Nonylphenylpolyglykol-äther (30 AeO) | 12,3 | 16 | 12 | 15 | |
| 10 | 20,0 Harnstoff<br>19,8 $(NH_4)_2HPO_4$<br>19,8 $KNO_3$<br>20,4 $KH_2PO_4$ | 7,0 Polyglykol 6 000 | 13,0 | 16 | 20 | 16 | |
| 11 | 22,7 Harnstoff<br>19,8 $(NH_4)H_2PO_4$<br>28,2 $K_2SO_4$<br>10,0 $NH_4NO_3$ | 7,0 BcPG 80 (blockcopolymeres Polyäther-glykol) | 12,3 | 16 | 12 | 14 | |
| 12 | 41,9 Harnstoff<br>39,3 $(NH_4)H_2PO_4$ | 6,5 Polyglykol 6 000 | 12,3 | 24 | 24 | 0 | |
| 13 | 41,3 Harnstoff<br>38,0 $K_2SO_4$ | 9,0 Polyglykol 6 000 | 11,7 | 19 | 0 | 19 | |

# 0 012 808

Tabelle 1 (Fortsetzung)

| Beispiel Nr. | Zusammensetzung der Düngemittelpasten (in Gew.-%) | | | Nährstoffgehalt der Paste (in Gew.-%) | | | | |
|---|---|---|---|---|---|---|---|---|
| | Nährstoffe (Gew.-%) | Polyglykoläther-komponente (Gew.-%) | Wasser (Gew.-%) | N (Gew.-%) | $P_2O_5$ (Gew.-%) | $K_2O$ (Gew.-%) | Spuren salze (Gew.-%) |
| 14 | 29,8 Harnstoff<br>19,8 $(NH_4)H_2PO_4$<br>28,2 $K_2SO_4$<br>2,0 Spurenkonzentrat A | 7,5 Nonylphenylpolygly-koläther (15 AeO) | 12,7 | 16 | 12 | 14 | 2 |
| 15 | 29,8 Harnstoff<br>19,8 $(NH_4)H_2PO_4$<br>28,2 $K_2SO_4$<br>2,0 Spurenkonzentrat A | 7,0 Nonylphenylpolygly-koläther (23 AeO) | 13,2 | 16 | 12 | 14 | 2 |
| 16 | 29,8 Harnstoff<br>19,8 $(NH_4)H_2PO_4$<br>28,2 $K_2SO_4$<br>2,0 Spurenkonzentrat A | 7,5 $nC_{18}$-Alkylpolygly-koläther (11 AeO) | 12,7 | 16 | 12 | 14 | 2 |
| 17 | 29,8 Harnstoff<br>19,8 $(NH_4)H_2PO_4$<br>28,2 $K_2SO_4$<br>2,0 Spurenkonzentrat A | 7,5 $nC_{18}$-Alkylpolygly-koläther (25 AeO) | 12,7 | 16 | 12 | 14 | 2 |
| 18 | 29,8 Harnstoff<br>19,8 $(NH_4)H_2PO_4$<br>28,2 $K_2SO_4$<br>2,0 Spurenkonzentrat A | 7,0 $C_{12}$-$C_{15}$-Alkylpolygly-koläther (13 AeO) | 13,2 | 16 | 12 | 14 | 2 |
| 19 | 29,8 Harnstoff<br>19,8 $(NH_4)H_2PO_4$<br>28,2 $K_2SO_4$<br>2,0 Spurenkonzentrat A | 7,0 $C_{12}$-$C_{15}$-Alkylpolygly-koläther (18 AeO) | 13,2 | 16 | 12 | 14 | 2 |
| 20 | 29,8 Harnstoff<br>19,8 $(NH_4)H_2PO_4$<br>28,2 $K_2SO_4$<br>2,0 Spurnekonzentrat A | 7,0 $C_{12}$-$C_{15}$-Alkylpolygly-koläther (25 AeO) | 12,7 | 16 | 12 | 14 | 2 |
| 21 | 29,8 Harnstoff<br>19,8 $(NH_4)H_2PO_4$<br>28,2 $K_2SO_4$<br>2,0 Spurenkonzentrat A | 7,5 BcPG 20 (blockcopolymeres Poly-ätherglykol) | 12,7 | 16 | 12 | 14 | 2 |
| 22 | 29,8 Harnstoff<br>19,8 $(NH_4)H_2PO_4$<br>28,2 $K_2SO_4$<br>2,0 Spurenkonzentrat A | 7,5 BcPG 40 (blockcopolymeres Poly-ätherglykol) | 12,7 | 16 | 12 | 14 | 2 |
| 23 | 29,8 Harnstoff<br>19,8 $(NH_4)H_2PO_4$<br>28,2 $K_2SO_4$<br>2,0 Spurenkonzentrat A | 12,0 BcPG 20 (blockcopolymeres Poly-ätherglykol) | 8,2 | 16 | 12 | 14 | 2 |
| 24 | 43,6 $KNO_3$<br>32,8 $(NH_4)H_2PO_4$ | 10,6 Polyglykol 6 000 | 13,0 | 10 | 20 | 20 | – |
| 25 | 63,0 Harnstoff | 12,0 Polyglykol 6 000 | 25,0 | 29 | – | – | – |

6

# 0 012 808

## Ansprüche

1. Wasserlösliche Düngemittelpasten, gekennzeichnet durch einen Gehalt von 58 bis 88 Gew.-% wasserlöslicher Pflanzennährstoffe, 0 bis 5 Gew.-% wasserlöslicher Spurenelementverbindungen, 4 bis 12 Gew.-% Polyglykoläther mit mindestens 9 AeO-Einheiten und/oder wasserlöslicher Polyglykolätherderivate mit mindestens 8 AeO-Einheiten sowie 8 bis 25 Gew.-% Wasser.

2. Wasserlösliche Düngemittelpasten gemäß Anspruch 1, dadurch gekennzeichnet, daß die Pflanzennährstoffe aus Harnstoff und/oder N- und/oder P- und/oder K- und/oder N,P,K-Düngesalzen bestehen.

3. Verfahren zur Herstellung von wasserlöslichen Düngemittelpasten gemäß Anspruch 1, dadurch gekennzeichnet, daß man bei 35 bis 100 °C 4 bis 12 Gew.-teile Polyglykoläther mit mindestens 9 AeO-Einheiten und/oder wasserlösliche Polyglykolätherderivate mit mindestens 8 AeO-Einheiten in 8 bis 25 Gew.-teilen Wasser löst, dieser Lösung unter Rühren 58 bis 88 Gew.-teile wasserlösliche Pflanzennährstoffe sowie 0 bis 5 Gew.-teile wasserlösliche Spurenelementverbindungen zugibt und die dabei erhaltene Mischung unter weiterem Rühren auf Raumtemperatur abkühlt.

4. Verfahren nach Anspruch 3, dadurch gekennzeichnet, daß die Pflanzennährstoffe aus Harnstoff und/oder N- und/oder P- und/oder K- und/oder N,P,K-Düngesalzen bestehen, wobei gegebenenfalls die Harnstoffzugabe zuerst erfolgt.

5. Verwendung von Düngemittelpasten gemäß Ansprüchen 1 und 2, vorzugsweise in Form ihrer wäßrigen Lösungen, zur Pflanzendüngung.

6. Verfahren zur Pflanzendüngung, dadurch gekennzeichnet, daß man auf Pflanzenkulturen und/oder Kulturböden und/oder Kultursubstrate wäßrige Lösungen von Düngemittelpasten gemäß Ansprüchen 1 und 2 aufbringt.

## Claims

1. Water-soluble fertilizer pastes containing from 58 to 88 % by weight of water-soluble plant nutrients, 0 to 5 % by weight of water-soluble compounds of micronutrients, 4 to 12 % by weight of polyglycol ethers having at least 9 ethylene oxide units and/or water-soluble polyglycol ether derivatives having at least 8 ethylene oxide units in the molecule and 8 to 25 % by weight of water.

2. Water-soluble fertilizer pastes as claimed in claim 1, wherein the plant nutrients are selected from the group consisting of urea, N-, P-, K- and N,P,K-fertilizer salts.

3. Process for the manufacture of a fertilizer paste as claimed in claim 1, which comprises dissolving at a temperature of from 35 to 100 °C, 4 to 12 parts by weight of polyglycol ether having at least 9 ethylene oxide units and/or water-soluble polyglycol ether derivative having at least 8 ethylene oxide units in the molecule in 8 to 25 parts by weight of water, adding to the solution obtained 58 to 88 parts by weight of water-soluble plant nutrients and 0 to 5 parts by weight of water-soluble compounds of micronutrients while stirring and cooling the mixture obtained to room temperature with continuous stirring.

4. The process as claimed in claim 3, wherein the plant nutrients are selected from the group consisting of urea, N-, P-, K- and N,P,K-fertilizer salts and optionally the urea is added first.

5. Method for using the fertilizer pastes as claimed in claim 1, preferably in the form of their aqueous solutions, for the fertilization of plants.

6. Method of plant fertilization which comprises treating plant cultures and/or culture soils and/or culture media with aqueous solutions of a fertilizer paste as claimed in claim 1 or 2.

## Revendications

1. Pâtes d'engrais solubles dans l'eau, caractérisées en ce qu'elles contiennent de 58 à 88 % en poids de substances nutritives hydrosolubles pour plantes, de 0 à 5 % en poids de composés d'oligoéléments solubles dans l'eau, de 4 à 12 % en poids d'un éther polyglycolique ayant au moins 9 motifs d'oxyde d'éthylène et/ou de dérivés d'éther polyglycolique solubles dans l'eau ayant au moins 8 motifs d'oxyde d'éthylène, ainsi que 8 à 25 % en poids d'eau.

2. Pâtes d'engrais solubles dans l'eau suivant la revendication 1, caractérisées en ce que les substances nutritives pour plantes se composent d'urée et/ou d'engrais salins N et/ou P et/ou K et/ou NPK.

3. Procédé de préparation de pâtes d'engrais solubles dans l'eau suivant la revendication 1, caractérisé en ce qu'on dissout à 35-100 °C, de 4 à 12 parties en poids d'un éther polyglycolique ayant au moins 9 motifs d'oxyde d'éthylène et/ou de dérivés d'éthers polyglycoliques solubles dans l'eau ayant au moins 8 motifs d'oxyde d'éthylène, dans 8 à 25 parties en poids d'eau, en ce qu'on ajoute à cette solution, tout en agitant de 58 à 88 parties en poids de substances nutritives pour plantes solubles dans l'eau ainsi que 0 à 5 parties en poids de composés d'oligoéléments solubles dans l'eau, et en ce qu'on refroidit le mélange ainsi obtenu à la température ambiante tout en continuant d'agiter.

7

**0 012 808**

4. Procédé suivant la revendication 3, caractérisé en ce que les substances nutritives pour plantes se composent d'urée et/ou d'engrais salins N et/ou P et/ou K et/ou NPK, l'addition d'urée étant éventuellement effectuée la première.

5. Utilisation de pâtes d'engrais suivant l'une des revendications 1 et 2, de préférence sous la forme de leurs solutions aqueuses, pour la fumure des plantes.

6. Procédé de fumure des plantes, caractérisé en ce qu'on applique sur les cultures et/ou sur les sols de culture, et/ou sur les substrats de culture, des solutions aqueuses de pâtes d'engrais suivant l'une des revendications 1 et 2.